# EUROPEAN PATENT SPECIFICATION

(11) **EP 3 288 244 B1**
(45) Date of publication and mention of the grant of the patent: **20.05.2020**
(21) Application number: 16861602.7
(22) Date of filing: 04.11.2016
(51) Int. Cl.: H04M 1/02, G02B 7/02, G02B 7/14, G03B 17/56, G03B 15/05

(54) **HOLDING CASE FOR INSTALLING HANDSET ADD-ON LENS, HANDSET EXTERNAL LENS CONNECTION STRUCTURE, AND HANDSET INSTALLATION CASE**
HALTEKASTEN ZUR INSTALLATION EINER HANDAPPARATZUSATZLINSE, STRUKTUR ZUR VERBINDUNG EINER EXTERNEN HANDAPPARATLINSE UND HANDAPPARATINSTALLATIONSKASTEN
BOÎTIER DE SUPPORT POUR INSTALLER UN OBJECTIF D'EXTENSION DE COMBINÉ, STRUCTURE DE LIAISON D'OBJECTIF EXTÉRIEUR DE COMBINÉ, ET BOÎTIER D'INSTALLATION DE COMBINÉ

(30) Priority: 06.11.2015 CN 201520888399 U; 20.04.2016 CN 201620341020 U; 14.10.2016 CN 201621125826 U
(43) Date of publication of application: 28.02.2018
(73) Proprietor: Guangdong Sirui Optical Co., Ltd, Zhongshan, Guangdong 528458 (CN)
(72) Inventor: LI, Jie, Zhongshan Guangdong 528458 (CN)
(74) Representative: Lavoix
(86) International application number: PCT/CN2016/104615
(87) International publication number: WO 2017/076334

(56) References cited:
- WO-A1-2013/081264
- CN-A- 103 402 047
- CN-A- 105 403 974
- CN-U- 202 231 761
- CN-U- 203 119 957
- CN-U- 203 278 950
- CN-U- 203 587 938
- CN-U- 203 590 313
- CN-U- 203 747 876
- CN-U- 203 965 702
- CN-U- 204 009 321
- CN-U- 204 013 657
- CN-U- 204 669 430
- CN-U- 205 123 809
- CN-Y- 201 378 839
- US-A1- 2012 262 540
- US-A1- 2013 206 614
- US-A1- 2015 042 877
- US-A1- 2015 293 430
- US-B1- 9 007 522

## Description

### Technical Field

The present invention relates to the field of handset accessories, and in particular, relates to a holding case for installing handset add-on lens, a handset external lens connection structure and a handset installation case.

### Background

US 2015/293430 A1 relates to an auxiliary optical systems for removably attaching to mobile devices, including mobile telephones with onboard cameras, to provide enhanced optical features. Some auxiliary optical systems can be configured to attach to multiple different types and sizes of mobile devices.

US2015/087359 A1 relate to an optical system having multiple (e.g., two or more) optical components attached to a retainer portion, and the retainer portion may be removably attached to mobile electronic devices such as mobile phones, tablet computers, media players, and the like. US2013/206614 A1 relate to a case for a communication device, having two or more portions movable with respect to each other. A first case portion may cover a particular component or area of the communication device. Accessories or auxiliary structures may be available for use with the particular component, and may be configured to attach to or be used with a communication device housing of a particular size or shape.

US2012262540 A1 relates to an apparatus includes a housing, a concave panoramic reflector, a support structure configured to hold the concave panoramic reflector in a fixed position with respect to the housing, and a mounting device for positioning the housing in a fixed orientation with respect to a computing device such that light reflected by the concave panoramic reflector is directed to a light sensor in the computing device.

CN203119957 U relates to an an intelligent cell phone sheath capable of preventing electromagnetic waves. The intelligent cell phone sheath capable of preventing the electromagnetic waves includes a back shell and a top board, wherein the back shell is provided with a bottom board and four side walls. A lens hole is formed through the bottom board and a plurality of first pivoting pieces are arranged on one of the side faces.

US2015042877 A1 relates to an auxiliary optical device for a mobile electronic device has a mounting component that is configured to be selectively attachable and detachable from the mobile electronic device. The mounting component is configured to be coupled to and decoupled from a mobile electronic device using an anchor that is inserted into a port of the mobile electronic device. CN204669430 U relates to a cell -phone auto heterodyne light filling lamp, including lamps and lanterns and a connecting piece.

With the development of the society, more and more people began to use handsets, especially smartphones. Thus, handset manufacturers nowadays try their best to add functions that may attract users to handsets, for example, photographing function. However, as limited by the size and weight of a handset, the handset integrated with photographing function usually can only perform simple photographing, so users' demands of long distance photographing, optical zooming, wide angle photographing, or fill light cannot be satisfied. Therefore, users of handsets with photographing function expect the emerging of an external handset accessory that can expand the photographing function of the handset, so as to meet their demands for high quality photographing.

Holding cases in prior arts for installing handset add-on lens are usually mounted on the back of a handset by snap-fitting, and a connection structure is provided on the holding case to be detachably connected to a back add-on lens, thereby aligning the mounted back add-on lens with a back camera of the handset itself. The holding case in prior arts for installing handset add-on lens has the following disadvantages: (1) the holding case of prior art is mounted on the back of the handset by snap-fitting, so that only a back add-on lens can be mounted thereon, whereas a front add-on lens cannot be mounted at the same time; (2) the holding case is mounted on the entire back of the handset by snap-fitting, as a result, the holding case has large size and weight, which is not only inconvenient to carry around, but also inconvenient to mount and demount. Also, most of the holding cases on the market cannot be accurately aligned with the camera of the handset, and manual adjustment usually needs to be relied on, which is very inconvenient.

Chinese patent literature CN201965284U discloses a lens assembly for smartphone, comprising a handset shell for protecting a handset, a connection member, and a lens group, wherein the handset shell has a through hole on an outer side of a camera of the handset and corresponding to the camera, the lens group is connected to the through hole by the connection member and thus forms an optical cooperation with the camera. However, in the lens assembly for smartphone of the aforementioned patent literature, because the connection member protrudes out of the handset shell, the entire handset shell assembly has bulky and irregular shape, which has negative effect for carrying the handset around; if the connection member is demounted, it easily goes missing. Also, the connection between the lens group and the connection member is a threaded connection or a snap-fit connection, and this connection structure is inconvenient, time consuming and effort consuming to mount and demount. Normal methods for increasing the quality of handset photographing or filming usually include adding a separate fill light or adding a separate external lens. For example, Chinese patent literature CN204733259U discloses a light filling device for self-photographing with a handset, comprising: a fill light, a mounting holder and a recharging cord, wherein, the fill light is selectively connected to the mounting holder or the recharging cord in a detachable manner; the bottom of the fill light is provided with an USB port for connecting to the mounting holder or the recharging cord. However, in the aforementioned patent literature, when the fill light is snap-fitted on the handset, due to limitation of the structure of the handset itself, the fill light can only be snap-fitted on the upper end of the handset, but such arrangement would block the front camera or the back camera thereof, and frequently moving the fill light would cause abrasion to the front camera, the back camera or the handset shell.

### Summary of the Invention

An objective of the present application is to overcome the defects in prior art related to undesirable connection structure of holding cases for installing handset add-on lens, which causes the handset shell to be bulky and causes the handset to be inconvenient to carry around, assemble and disassemble, by means of providing a holding case for installing handset add-on lens, a handset external lens connection structure and a handset installation case that have simple and compact structure and are easy to assemble and disassemble.

The present application provides an external lens connection structure for handset according to claim 1. The dependent claims set out particular embodiments of the invention.

Preferably, the housing body also has a bottom wall and oppositely disposed left and right side walls; an insertion cavity, which is for the end of the handset where the front and back cameras are arranged to be inserted into, is formed by the bottom wall, the left side wall, the right side wall, the front side wall and the back side wall; and the insertion cavity has a depth that is adapted for the end of the handset being inserted into without obstructing the display screen of the handset.

Preferably, an earpiece hole is also provided in the front side wall at a location corresponding to an earpiece port of the handset and is aligned with the earpiece port.

Preferably, a distance sensor hole is also provided in the front side wall at a location corresponding to a distance sensor of the handset and is aligned with the distance sensor.

Preferably, a flashlight hole is also provided in the back side wall at a location corresponding to a flashlight of the handset and is aligned with the flashlight.

Preferably, the flashlight hole is communicated with the back add-on lens snapping opening. Preferably, a snap-fit structure is provided on the inner surfaces of the front side wall and the back side wall for fastening the handset inserted between the front side wall and the back side wall. Preferably, the snap-fit structure comprises notches respectively formed on the inner surface of the front side wall and on the inner surface of the back side wall, and resilient strips mounted inside the notches.

Preferably, the protruding shoulder is a circular flange formed on the fitting head, and the circular flange cooperates with the two second ribs to form two snapping slots.

Preferably, a plurality of the first ribs are disposed symmetrically and spaced apart in the circumferential direction, and a plurality of the second ribs are correspondingly disposed in the circumferential direction.

Preferably, a circular flange is formed on the fitting head and disposed opposite the second ribs, wherein the circular flange forms the protruding shoulder and cooperates with each of the second ribs to form a plurality of the snapping slots.

Preferably, two first ribs are symmetrically disposed, and two second ribs are symmetrically disposed.

Preferably, a line connecting one end of the second rib to a center of symmetry and another line connecting the other end of the second rib to the center of symmetry intersect at an angle of 80°. Preferably, a line connecting one end of the first rib to a center of symmetry and another line connecting the other end of the first rib to the center of symmetry intersect at an angle of 96°. Preferably, the connection structure is a threaded connection structure or a snap-fit connection structure.

Preferably, resilient material is provided on two opposing side surfaces of the third side wall.

Preferably, the first connection structure is disposed on a side surface of the third side wall other than the two opposing side surfaces of the third side wall.

Preferably, the length of the first side wall along the longitudinal direction of the handset is no longer than the distance from the edge of the handset to the display screen of the handset.

The technical schemes of the present application have the following advantages:
(1) In the present application, the holding case is configured to have a housing body with a front side wall, a back side wall and a space between the front side wall and the back side wall adapted for fitting one end of a handset having a front camera and a back camera, so that a front add-on lens and a back add-on lens can be simultaneously assembled onto the holding case, thereby meeting various requirements of users.
(2) In the present application, the holding case is directly sleeved on one end of a handset, which has a small size and is convenient to carry around, and it is also easy and secure to attach the holding case to the handset or detach the holding case from the handset.
(3) In the present application, the front add-on lens snapping opening and the back add-on lens snapping opening have a simple structure, and are very convenient for connecting or detaching a front add-on lens and a back add-on lens.
(4) In the connection fastener assembly of the present application, after the fitting head is inserted into the snapping opening, the rib on the fitting head is rotated into the snapping slot of the snapping opening, or in another instance, the rib on the snapping opening is rotated into the snapping slot of the fitting head, and as the rotation angle increases, the fitting between the rib and the snapping slot is changed from a clearance fitting to an interference fitting, so as to achieve axial fastening and rotational fastening between the fitting head and the snapping opening. Therefore, the connection fastener assembly of the present application not only has a simple structure, but also is fast and reliable to connect, wherein the connection between the first fastener and the second fastener can be realized by simply inserting the fitting head into the snapping opening and then rotating for less than half a circle.
(5) The handset external lens connection structure of the present application is used for connection between a handset protection case and an external lens, and is convenient and fast to connect. Besides, because the snapping opening is formed on the handset protection case while the fitting head is formed on the external lens, when the handset protection case is not connected to the external lens, the portability of the handset would not be adversely affected by the existence of a fitting head upon the surface of the handset protection case.
(6) The handset installation case provided by the present application comprises a housing body for being sleeved on a handset, wherein, the housing body is provided with a connection structure for connecting to external handset accessories, the housing body comprises a first side wall adapted for fitting a front side of the handset, a second side wall adapted for fitting a back side of the handset and disposed opposite the first side wall, and a third side wall adapted for fitting lateral sides of the handset and interconnecting the first side wall with the second side wall; the connection structure comprises a first connection structure on the third side wall for being fixedly connected to a fill light. Because the fill light is fixedly connected on the handset installation case, instead of being directly connected to the handset, it would not abrade the handset shell, and because the fill light is connected on the third side wall, it would not obstruct a front camera or a back camera, or abrade the front camera or the back camera.
(7) In the handset installation case provided by the present application, the connection structure also comprises a second connection structure, disposed on the second side wall and corresponding to a back camera of the handset, for being fixedly connected to a back add-on lens; the connection structure also comprises a third connection structure, disposed on the first side wall and corresponding to a front camera of the handset, for being fixedly connected to a front add-on lens. As the handset installation case is sleeved on the handset and has a relative large surface area, multiple connection structures can be arranged on the handset installation case according to use requirements, so as to connect to external handset accessories for meeting various different functional requirements, i.e., not only a second connection structure for being fixedly connected to a back add-on lens can be provided at a position on the handset installation case corresponding to a back camera, but also a third connection structure for being fixedly connected to a front add-on lens can be provided at a position on the handset installation case corresponding to a front camera, so as to meet users' requirements for long distance photographing, optical zooming or wide angle photographing, and light compensation.
(8) In the handset installation case provided by the present application, resilient material is provided on two opposing side surfaces of the third side wall, so as to prevent hard contact between the handset and the installation case and make the acting force between the two more uniformly distributed, thereby making the mounting of the handset installation case more stable.
(9) In the handset installation case provided by the present application, the first connection structure is disposed on a side surface of the third side wall other than the two opposing side surfaces of the third side wall, so that the fill light is located at a higher position when mounted on the first connection structure, which brings a wider fill light area with more convenience for light compensation of photographing.
(10) In the handset installation case provided by the present application, the length of the first side wall along the longitudinal direction of the handset is no longer than the distance from the edge of the handset to the display screen of the handset, so that normal use of the display screen will not be affected.

### Brief Description of the Drawings

In order to more clearly describe the technical schemes in the specific embodiments of the present application or in the prior art, hereinafter, the accompanying drawings required to be used in the description of the specific embodiments or the prior art will be briefly introduced. Apparently, the drawings described below show some of the embodiments of present application, and for those skilled in the art, without expenditure of creative labor, other drawings can be derived on the basis of these accompanying drawings.
Figure 1 is a stereogram of a holding case for installing handset add-on lens according to the present application;
Figure 2 is an assembled structural diagram of the holding case for installing handset add-on lens when assembled with a handset, a front add-on lens and a back add-on lens;
Figure 3 is an exploded view of Figure 2;
Figure 4 is a front view of Figure 1;
Figure 5 is a back view of Figure 1;
Figure 6 is a bottom view of Figure 1;
Figure 7 is a sectional view of the front add-on lens snapping opening or the back add-on lens snapping opening;
Figure 8 is a structural diagram of the fitting head of the front add-on lens or the back add-on lens;
Figure 9 is a sectional view of a first fastener of a connection fastener assembly according to the present application;
Figure 10 is a top view of the first fastener of the connection fastener assembly according to the present application;
Figure 11 is an elevation view of a second fastener of the connection fastener assembly according to the present application;
Figure 12 is a top view of the second fastener of the connection fastener assembly according to the present application;
Figure 13 is a top view of the structure of the first fastener of the connection fastener assembly inserted into the second fastener thereof according to the present application;
Figure 14 is a stereogram of an embodiment of a handset installation case according to the present application;
Figure 15 is a back view of the handset installation case shown in Figure 14;
Figure 16 is a bottom view of the handset installation case shown in Figure 14;
Figure 17 is an assembled structure view of an embodiment of a handset assembly according to the present application;
Figure 18 is an exploded structure view of the embodiment of the handset assembly according to the present application.

### Reference numerals:

- 1-: holding case
- 1a-: front side wall
- 1b-: back side wall
- 2-: front add-on lens snapping opening
- 3-: distance sensor hole
- 4-: earpiece hole
- 5-: notch
- 6-: earpiece
- 7-: distance sensor
- 8-: front camera
- 9-: back add-on lens snapping opening
- 10-: flashlight hole
- 11-: back add-on lens
- 12-: front add-on lens
- 13-: first rib
- 14-: handset
- 15-: circular flange
- 16-: second rib
- 101-: snapping opening
- 102-: first rib
- 103-: fitting head
- 104-: second rib
- 105-: circular flange
- A-: first fastener
- B-: second fastener
- 211-: connection structure
- 2111-: first connection structure
- 2112-: second connection structure
- 2113-: third connection structure
- 212-: first side wall
- 213-: second side wall
- 214-: third side wall
- 202-: resilient material
- 210-: installation case
- 220-: handset
- 230-: fill light
- 240-: front add-on lens
- 250-: back add-on lens

### Detailed Description of Embodiments

A clear and complete description of the technical schemes of the present application is given below, in conjunction with the accompanying drawings. Apparently, the described embodiments are a part, but not all, of the embodiments of the present application. All the other embodiments, derived by a person skilled in the art on the basis of the embodiments described in the present application without expenditure of creative labor, are included in the protection scope of the present application.

In the description of the present application, it needs to be noted that, unless specifically defined or restricted otherwise, terms such as "mount", "interconnect", "connect" should be broadly construed, for example, they may be fixed connection or detachable connection or integral connection; they may be mechanical connection or electrical connection; they may be direct connection, or indirect connection via an intermediate medium, or internal communication between two units; they may be wireless connection, or wired connection. For a person skilled in the art, the specific meaning of the aforementioned terms in the present application can be understood according to specific situations thereof.

Furthermore, the technical features involved in the various embodiments of the present application described below can be combined with one another as long as they do not conflict with one another.

### Embodiment 1

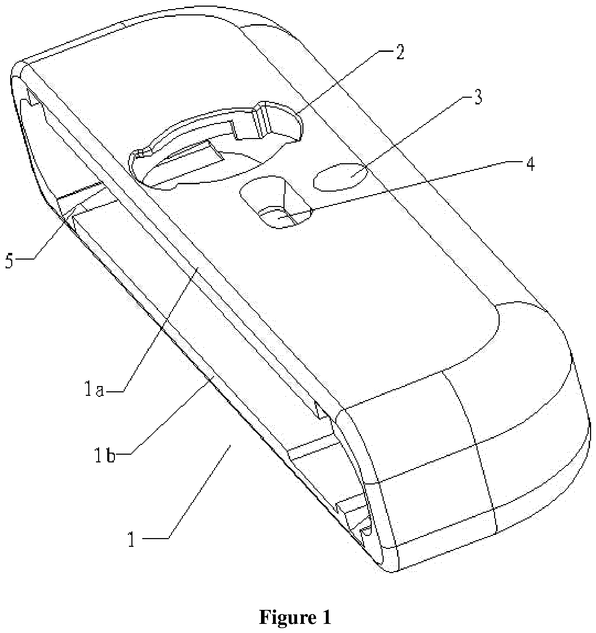

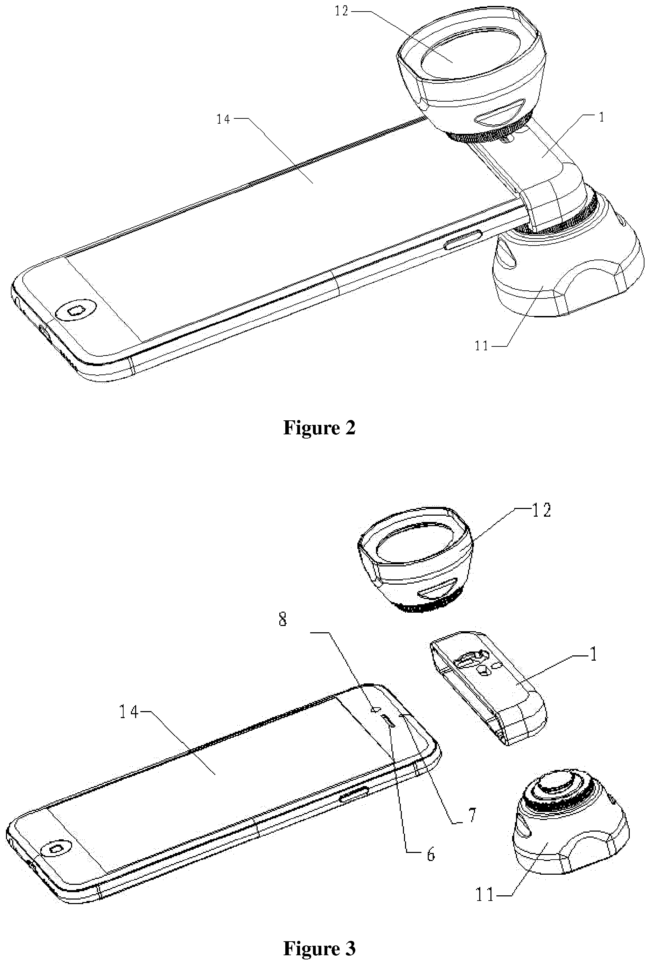

As shown in Figure 1 to Figure 8, this embodiment provides a holding case for installing handset add-on lens, which comprises a housing body, wherein, the housing body has a front side wall la and a back side wall 1b that are oppositely disposed, a space between the front side wall la and the back side wall 1b is adapted for fitting one end of a handset 14 provided with a front camera and a back camera, a front add-on lens snapping opening 2 is provided in the front side wall la and corresponds to the front camera 8 of the handset 14, and a back add-on lens snapping opening 9 is provided in the back side wall 1b and corresponds to the back camera of the handset 14.

In this embodiment, the holding case 1 is configured to have a housing body with a front side wall 1a, a back side wall 1b and a space between the front side wall 1a and the back side wall 1b adapted for fitting one end of a handset 14 having a front camera and a back camera, so that a front add-on lens 12 and a back add-on lens 11 can be simultaneously assembled onto the holding case.

The housing body may have various structures, and in this embodiment, preferably, the housing body also has a bottom wall and oppositely disposed left and right side walls; an insertion cavity, which is for the end of the handset where the front and back cameras are arranged to be inserted into, is formed by the bottom wall, the left side wall, the right side wall, the front side wall and the back side wall; and the insertion cavity has a depth that is adapted for the end of the handset being inserted into without obstructing the display screen of the handset. The holding case with such a structure not only has a low manufacture cost, but also has a small size, is convenient to carry and is also easy to assemble or disassemble.

In order to prevent the earpiece from being obstructed by the holding case 1 sleeved onto the handset so as to prevent the function of the earpiece from being adversely affected, an earpiece hole 4 is also provided in the front side wall 1a at a location corresponding to the earpiece 6 of the handset and is aligned with the earpiece 6. Preferably, the shape and size of the earpiece hole 4 is consistent with the shape and size of the earpiece 6 on the handset 14.

In the meantime, in order to prevent the function of the distance sensor 7 from being adversely affected, a distance sensor hole 3 is also provided in the front side wall la at a location corresponding to the distance sensor 7 of the handset and is aligned with the distance sensor 7.

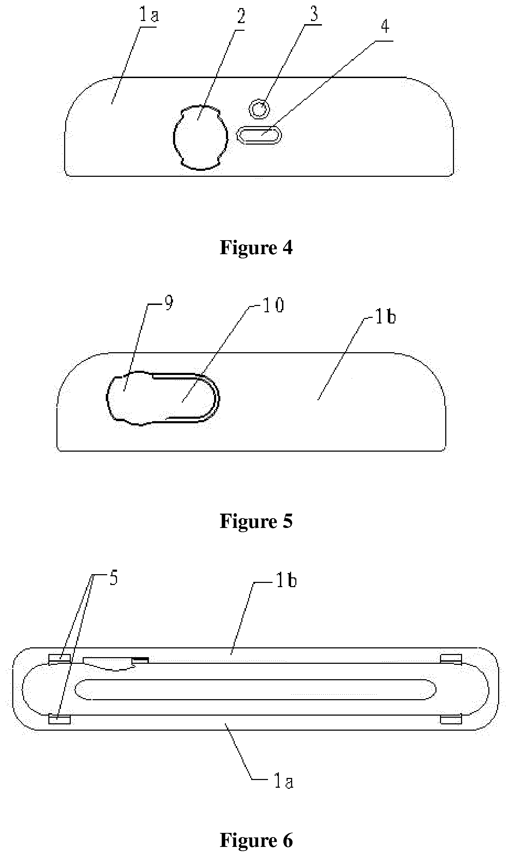

Furthermore, in order to prevent the flashlight from being obstructed by the back side wall 1b of the holding case 1 so as to prevent the photographing effect from being adversely affected, a flashlight hole 10 is also provided in the back side wall 1b at a location corresponding to the flashlight of the handset and is aligned with the flashlight. When the flashlight on the handset 14 is disposed close to the back camera of the handset, as shown in Figure 5, preferably, the flashlight hole 10 is communicated with the back add-on lens snapping opening 9.

As shown in Figure 6, a snap-fit structure is provided on the inner surfaces of the front side wall 1a and the back side wall 1b for fastening the handset inserted between the front side wall 1a and the back side wall 1b. By providing this snap-fit structure, the handset 14 inserted into the holding case 1 can be fastened. In this embodiment, preferably, the snap-fit structure comprises notches 5 respectively formed on the inner surface of the front side wall la and on the inner surface of the back side wall 1b, and resilient strips mounted inside the notches 5. By providing the resilient strips, not only the handset can be fastened, but also the handset can be plugged in or plugged out with a comfortable feeling.

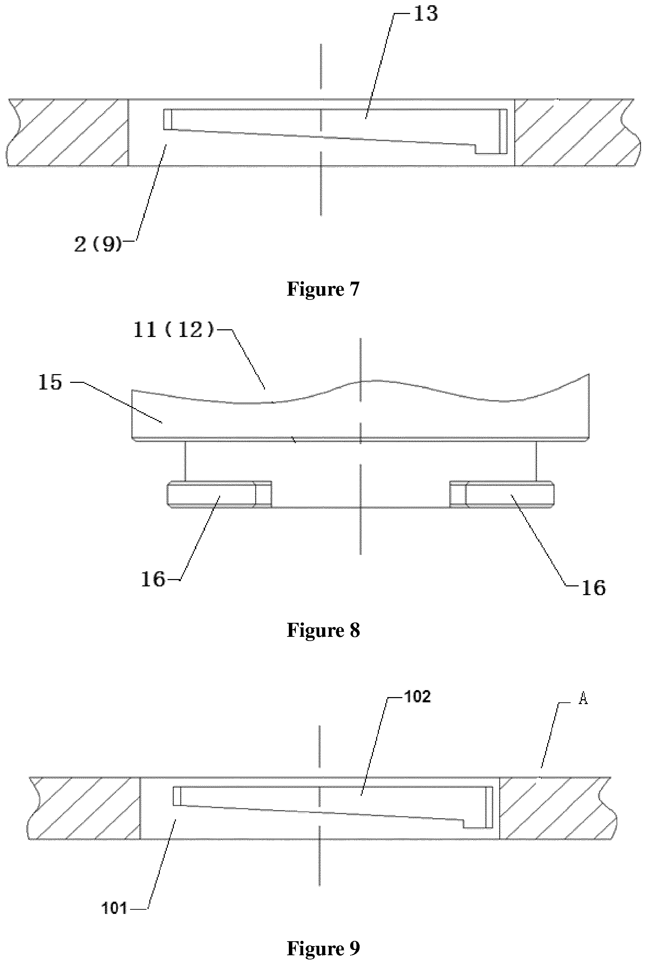

The front add-on lens snapping opening 2 and the back add-on lens snapping opening 9 may or may not have the same structure. In this embodiment, as shown in Figure 7 and Figure 8, the front add-on lens snapping opening 2 and the back add-on lens snapping opening 9 have the same structure that two sections of protruding first ribs 13 are formed on the inner wall of the snapping opening and are spaced apart in the circumferential direction; a corresponding front add-on lens 12 or back add-on lens 11 has a fitting head, the outer wall of the fitting head is formed with two protruding second ribs 16 spaced apart in the circumferential direction and a protruding shoulder disposed opposite the second ribs 16, so as to form a snapping slot between the second rib 16 and the protruding shoulder, the first rib 13 is adapted for entering the snapping slot with the rotation of the snapping opening after the fitting head is inserted into the snapping opening; a surface of the first rib 13 facing the second rib 16 or facing the protruding shoulder is formed as a helical surface, and the fitting between the helical surface and the snapping slot is changed from a clearance fitting to an interference fitting in the process of the first rib 13 entering the snapping slot. With such a structure of the snapping opening, when inserting the front add-on lens or the back add-on lens into the snapping opening, the connection and fastening can be completed by simply rotate the lens, which has a reliable connection and is very convenient for use. Preferably, the protruding shoulder is a circular flange 15 formed on the fitting head, and the circular flange 15 cooperates with the two second ribs 16 to form two snapping slots.

### Embodiment 2

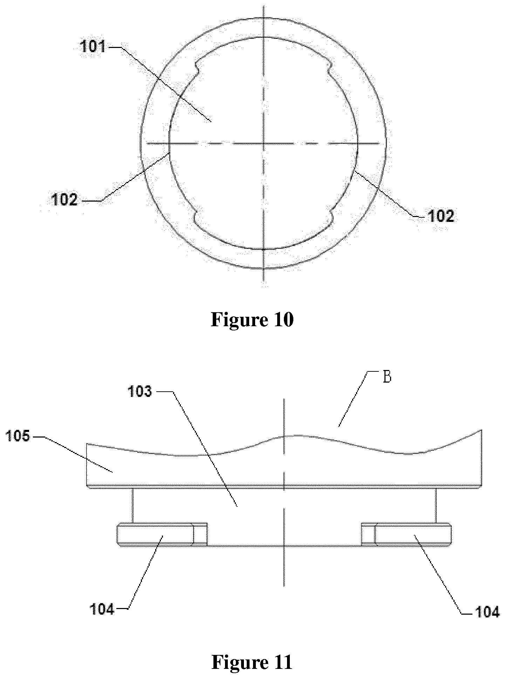

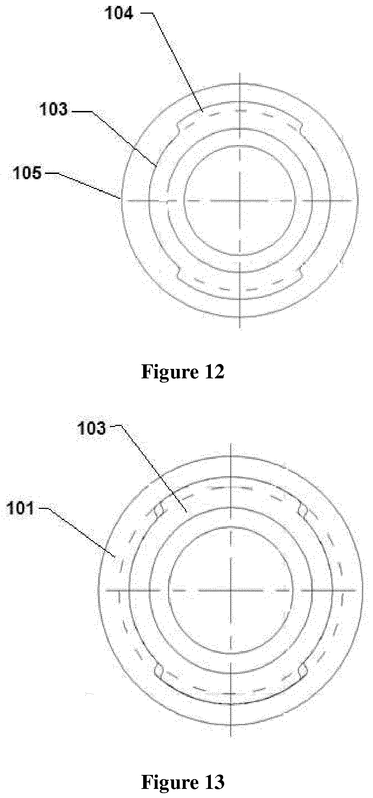

As shown in Figure 9 to Figure 13, this embodiment provides a connection fastener assembly, which comprises a first fastener A formed with a snapping opening 101, and a second fastener B formed with a fitting head 103 adapted for being inserted into the snapping opening 101.

At least one protruding first rib 102 is formed on the inner wall of the snapping opening 101.

At least one protruding second rib 104 is formed on the outer wall of the fitting head 103.

A protruding shoulder is provided on the outer wall of the fitting head 103 and disposed opposite the second rib 104, so as to form a snapping slot between the second rib 104 and the protruding shoulder, the first rib 102 is adapted for entering the snapping slot with the rotation of the snapping opening 101 after the fitting head 103 is inserted into the snapping opening 101, and the fitting between the first rib 102 and the snapping slot is changed from a clearance fitting into an interference fitting in the process of the first rib 102 entering the snapping slot.

In this embodiment, the first rib 102 on the snapping opening 101 is rotated into the snapping slot of the fitting head 103, and as the rotation angle increases, the fitting between the first rib 102 and the snapping slot is changed from a clearance fitting to an interference fitting, so as to achieve axial fastening and rotational fastening between the fitting head 103 and the snapping opening 101. Therefore, the connection fastener assembly of this embodiment not only has a simple structure, but also is fast and reliable to connect, wherein the connection between the first fastener A and the second fastener B can be realized by simply inserting the fitting head 103 into the snapping opening 101 and then rotating for less than half a circle.

Furthermore, as the second rib 104 and the protruding shoulder form the snapping slot, the snapping slot is a curved slot, and a surface of the first rib 102 facing the second rib 104 or facing the protruding shoulder is formed as a helical surface. This structure is easy to implement and convenient to operate, wherein, as the rotation angle increases, the fitting between the first rib 102 and the curved slot is gradually changed into an interference fitting.

A plurality of the first ribs 102 are disposed symmetrically and spaced apart in the circumferential direction, and a plurality of the second ribs 104 are correspondingly disposed in the circumferential direction. Preferably, two first ribs 102 are symmetrically disposed, and two second ribs 104 are symmetrically disposed. Also, a circular flange 105 is formed on the fitting head 103 and disposed opposite the second ribs 104, the circular flange 105 forms the protruding shoulder and cooperates with the two second ribs 104 to form two snapping slots.

When there are two second ribs 104, preferably, a line connecting one end of the second rib 104 to a center of symmetry and another line connecting the other end of the second rib 104 to the center of symmetry intersect at an angle of 80°, accordingly, a line connecting one end of the first rib 102 to a center of symmetry and another line connecting the other end of the first rib 102 to the center of symmetry intersect at an angle of about 100°, and as a result, the first rib 102 and the second rib 104 has a large contacting area, which makes the connection more reliable. In design, preferably, a line connecting one end of the first rib 102 to a center of symmetry and another line connecting the other end of the first rib 102 to the center of symmetry intersect at an angle of 96°, so that a gap of 4° is reserved for the second rib, thereby avoiding the inevitable rounded corners left by cutting tools when machining the first rib 102 and the second rib 104.

### Embodiment 3

As a variant of Embodiment 2, in this embodiment, the second rib 104 and the protruding shoulder form the snapping slot, a surface of the second rib 104 facing the protruding shoulder or a surface of the protruding shoulder facing the second rib 104 is formed as a helical surface, and the first rib 102 is a curved rib.

### Embodiment 4

As an alternative embodiment, a protruding shoulder is provided on the inner wall of the snapping opening 101 and disposed opposite the first rib 102, so as to form a snapping slot between the first rib 102 and the protruding shoulder, the second rib 104 is adapted for entering the snapping slot with the rotation of the fitting head 103 after the fitting head 103 is inserted into the snapping opening 101, and the fitting between the second rib 104 and the snapping slot is changed from a clearance fitting to an interference fitting in the process of the second rib 104 entering the snapping slot. However, as the first rib 102 and the protruding shoulder have to be formed inside the snapping opening 101, it is relatively not easy to manufacture. Hence, the configuration of the above-mentioned Embodiment 2 is preferably implemented.

Furthermore, as the first rib 102 and the protruding shoulder form the snapping slot, the snapping slot is a curved slot, and a surface of the second rib 104 facing the first rib 102 or facing the protruding shoulder is formed as a helical surface.

### Embodiment 5

As a variant of Embodiment 4, in this embodiment, the first rib 102 and the protruding shoulder form the snapping slot, a surface of the first rib 102 facing the protruding shoulder or a surface of the protruding shoulder facing the first rib 102 is formed as a helical surface, and the second rib 104 is a curved rib.

The operation process of the connection fastener assembly of this application is as follows:
When connecting the first fastener A with the second fastener B, the fitting head 103 of the second fastener B is inserted into the snapping opening 101 of the first fastener A so that each second rib 104 is inserted into a space between two neighboring first ribs 102, and then the first fastener A or the second fastener B is rotated so that the fitting between a back surface of the first rib 102 and a back surface of the second rib 104 changes from a clearance fitting to an interference fitting, thereby achieving reliable connection between the first fastener A and the second fastener B.

When detaching the connection between first fastener A and the second fastener B, it only requires to reversely rotate the first fastener A or the second fastener B so that the fitting between a back surface of the first rib 102 and a back surface of the second rib 104 changes from an interference fitting to a clearance fitting, and when each of the second ribs 104 is rotated to be disposed in the space between two neighboring first ribs 102, the fitting head 103 can then be pulled out from the snapping opening 101.

### Embodiment 6

This embodiment provides an external lens connection structure for handset, which comprises the aforementioned connection fastener assembly, wherein, a handset protection case has the first fastener A, an external lens has the second fastener B, the snapping opening 101 is a through-hole aligned with and connected to a camera of the handset, an end of the external lens connecting to the handset protection case is formed with the fitting head 103. The connection fastener assembly is used for connection between the handset protection case and the external lens, and is convenient and fast to connect. Besides, because the snapping opening 101 is formed on the handset protection case while the fitting head 103 is formed on the external lens, when the handset protection case is not connected to the external lens, the portability of the handset would not be adversely affected by the existence of a fitting head upon the surface of the handset protection case. This kind of configuration is preferably implemented.

Of course, as an alternative, a handset protection case may have the second fastener B, an external lens may have the first fastener A, the handset protection case is formed with the fitting head 103, a through-hole at the center of the fitting head 103 is aligned with and connected to a camera of the handset, an end of the external lens connecting to the handset protection case is formed with the snapping opening 101. This kind of configuration is also convenient and fast to connect, but because the fitting head 103 would protrude from the handset protection case, the portability of the handset is adversely affected.

### Embodiment 7

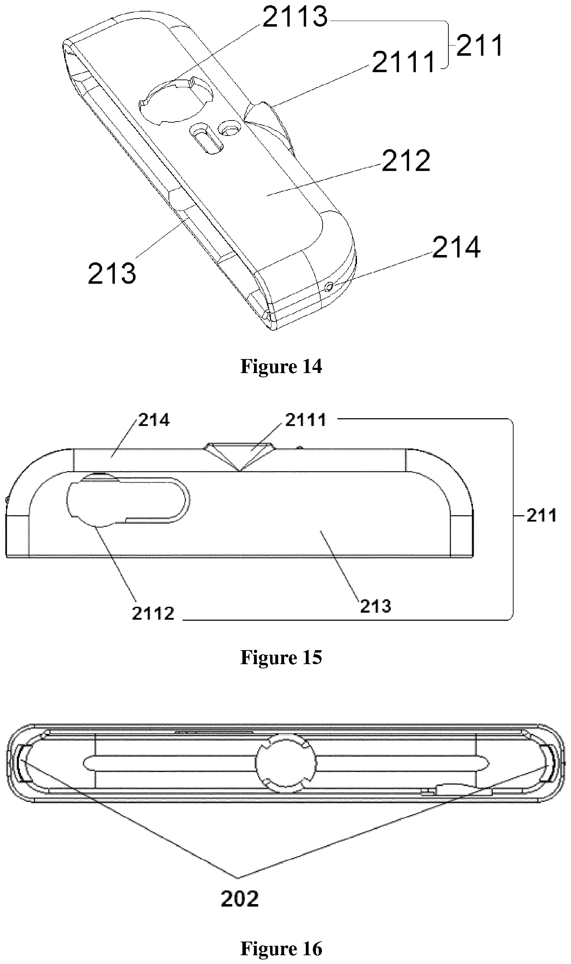

Figure 14 is a stereogram of an embodiment of a handset installation case provided by the present application. As shown in Figure 14, this embodiment provides a handset installation case, which comprises a housing body for being sleeved on a handset, wherein, the housing body is provided with a connection structure 211 for connecting to external handset accessories, the housing body comprises a first side wall 212 adapted for fitting a front side of the handset, a second side wall 213 adapted for fitting a back side of the handset and disposed opposite the first side wall 212, and a third side wall 214 adapted for fitting lateral sides of the handset and interconnecting the first side wall 212 with the second side wall 213; the connection structure 211 comprises a first connection structure 2111 on the third side wall 214 for being fixedly connected to a fill light.

Wherein, as the fill light is fixedly connected on the handset installation case, instead of being directly connected to the handset, it would not abrade the handset shell, and because the fill light is connected on the third side wall 214, it would not obstruct a front camera or a back camera and also would not abrade the front camera or the back camera.

Specifically, in this embodiment, the connection structure 211 is a snap-fit connection structure. By using a compact snap-fit connection, a simple structure is achieved, which is convenient to assemble and disassemble, and after external accessories are connected thereon, the entire product has a good-looking appearance.

Figure 15 is a back view of the handset installation case shown in Figure 14. As shown in Figure 15, the connection structure 211 also comprises a second connection structure 2112, disposed on the second side wall 213 and corresponding to a back camera of the handset, for being fixedly connected to a back add-on lens.

Besides, as shown in Figure 14, the connection structure 211 also comprises a third connection structure 2113, disposed on the first side wall 212 and corresponding to a front camera of the handset, for being fixedly connected to a front add-on lens.

In this embodiment, as the handset installation case is sleeved on the handset and has a relative large surface area, multiple connection structures 211 can be arranged on the handset installation case according to use requirements, so as to connect to external handset accessories for meeting multiple different functional requirements, i.e., not only a second connection structure 2112 for being fixedly connected to a back add-on lens can be provided at a position on the handset installation case corresponding to a back camera, but also a third connection structure 2113 for being fixedly connected to a front add-on lens can be provided at a position on the handset installation case corresponding to a front camera, so as to meet users' requirements for long distance photographing, optical zooming or wide angle photographing, and light compensation. Of course, users may also mount other handset accessories thereon according to their photographing requirements.

Figure 16 is a bottom view of the handset installation case shown in Figure 14. As shown in Figure 16, resilient material 202 is provided on two opposing side surfaces of the third side wall 214.

By providing resilient material 202 on two opposing inner side surfaces of the third side wall 214, hard contact and abrasion between the handset and the installation case is prevented, and the acting force between the two is distributed more uniformly, so that the mounting of the handset installation case is more stable.

As shown in Figure 14 and Figure 15, the first connection structure 2111 is disposed on a side surface of the third side wall 214 other than the two opposing side surfaces of the third side wall 214, so that the fill light is located at a higher position when mounted on the first connection structure 2111, which brings a wider fill light area with more convenience for light compensation of photographing. It should be noted that, according to actual requirements, the first connection structure 2111 for mounting the fill light may also be arranged on an outer side of either of the two opposing side surfaces of the third side wall 214.

Furthermore, the length of the first side wall 212 along the longitudinal direction of the handset is no longer than the distance from the edge of the handset to the display screen of the handset, so that normal use of the display screen is unaffected.

### Embodiment 8

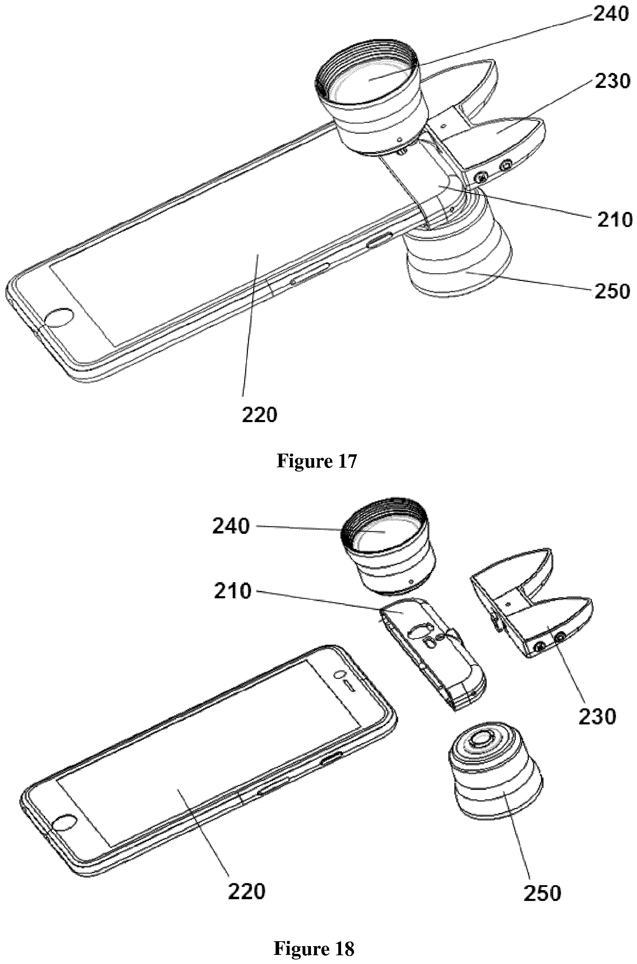

Figure 17 is an assembled structure view of an embodiment of a handset assembly provided by the present application. Figure 18 is an exploded structure view of the embodiment of the handset assembly provided by the present application. As shown in Figure 17 and Figure 18, this embodiment of the handset assembly provided by the present application comprises: an installation case 210 as described in Embodiment 7, a handset 220, and a fill light 230.

Specifically, the handset 220 has a control module with a function of controlling photograph-taking and/or video-taking, wherein the installation case 210 is sleeved on the handset 220; the fill light 230 is fixedly connected to the first connection structure 2111 of the installation case 210 and wirelessly connected to the control module such that turning on and turning off of the fill light 230 is controlled by the control module.

A front add-on lens 240 and a back add-on lens 250 are respectively fixedly connected to the connection structure 211 in such a manner that the back add-on lens 250 is fixedly connected to a second connection structure 2112, disposed on the second side wall 213 and corresponding to a back camera of the handset, for being fixedly connected to the back add-on lens; and the front add-on lens 240 is fixedly connected to a third connection structure 2113, disposed on the first side wall 212 and corresponding to a front camera of the handset, for being fixedly connected to the front add-on lens. Aside from the fill light 230 for light compensation of photograph-taking or video-taking, the front add-on lens 240 and the back add-on lens 250 are provided to further meet users' requirements for long distance photographing, optical zooming or wide angle photographing.

The fill light 230, the front add-on lens 240 and the back add-on lens 250 respectively have a snap-fit structure for fitting the connection structure.

As an alternative, the connection structure 211 may be implemented by a threaded connection structure instead.

Apparently, the aforementioned embodiments are merely examples illustrated for clearly describing the present application, rather than limiting the implementation ways thereof. For a person skilled in the art, various changes and modifications in other different forms can be made on the basis of the aforementioned description. It is unnecessary and impossible to exhaustively list all the implementation ways herein. However, any obvious changes or modifications derived from the aforementioned description are intended to be embraced within the protection scope of the present application.

## Claims

1. An external lens connection structure for handset, comprising:
a front add-on lens (12) and/or a back add-on lens (11);
a housing body, the housing body has a front side wall (1a) and a back side wall (1b) that are oppositely disposed, a space between the front side wall (1a) and the back side wall (1b) is adapted for fitting one end of a handset (14) provided with a front camera and a back camera, a front add-on lens snapping opening (2) is provided in the front side wall (1a) and corresponds to the front camera (8) of the handset (14), and a back add-on lens snapping opening (9) is provided in the back side wall (1b) and corresponds to the back camera of the handset (14),
**characterized in that**,
the front add-on lens snapping opening (2) and the back add-on lens snapping opening (9) both have two sections of protruding first ribs (13) formed on the inner wall of the snapping opening and spaced apart in the circumferential direction;
the front add-on lens (12) and/or back add-on lens (11) has a fitting head, the outer wall of the fitting head is formed with two protruding second ribs (16) spaced apart in the circumferential direction and a protruding shoulder disposed opposite the second ribs (16), so as to form a snapping slot between the second rib (16) and the protruding shoulder, the first rib (13) is adapted for entering the snapping slot with the rotation of the snapping opening after the fitting head is inserted into the snapping opening, and the first rib (13), the second rib (16) and the protruding shoulder are constructed in such a way that the fitting between the first rib (13) and the snapping slot is changed from a clearance fitting to an interference fitting in the process of the first rib (13) entering the snapping slot;
wherein a surface of the first rib (13) facing the second rib (16) or facing the protruding shoulder is formed as a helical surface; or wherein a surface of the second rib (16) facing the protruding shoulder or a surface of the protruding shoulder facing the second rib (16) is formed as a helical surface.

2. The external lens connection structure of Claim 1, **characterized in that**, the housing body also has a bottom wall and oppositely disposed left and right side walls; an insertion cavity, which is for the end of the handset (14) where the front and back cameras are arranged to be inserted into, is formed by the bottom wall, the left side wall, the right side wall, the front side wall (1a) and the back side wall (1b); and the insertion cavity has a depth that is adapted for the end of the handset being inserted into without obstructing the display screen of the handset.

3. The external lens connection structure of Claim 1, **characterized in that**, an earpiece hole (4) is also provided in the front side wall (1a) at a location corresponding to an earpiece (6) of the handset and is aligned with the earpiece (6).

4. The external lens connection structure of Claim 1, **characterized in that**, a distance sensor hole (3) is also provided in the front side wall (1a) at a location corresponding to a distance sensor (7) of the handset and is aligned with the distance sensor (7).

5. The external lens connection structure of Claim 1, **characterized in that**, a flashlight hole (10) is also provided in the back side wall (1b) at a location corresponding to a flashlight of the handset and is aligned with the flashlight.

6. The external lens connection structure of Claim 5, **characterized in that**, the flashlight hole (10) is communicated with the back add-on lens snapping opening (9).

7. The external lens connection structure of Claim 1, **characterized in that**, the housing body also has a lateral side wall (214) adapted for fitting lateral sides of the handset and interconnecting the front side wall (1a) with the back side wall (1b); the housing body is provided with a connection structure (211) for connecting to external handset accessories, the connection structure (211) comprises a first connection structure (2111) on the lateral side wall (214) for being fixedly connected to a fill light.

8. The external lens connection structure of Claim 7, **characterized in that**, the connection structure (211) is a threaded connection structure or a snap-fit connection structure.

9. The external lens connection structure of Claim 7, **characterized in that**, the length of the front side wall (1a) along the longitudinal direction of the handset is no longer than the distance from the edge of the handset to the display screen of the handset.

## Patentansprüche

1. Struktur zur Verbindung einer externen Handapparatlinse umfassend:
eine vordere Zusatzlinse (12) und/oder eine hintere Zusatzlinse (11);
einen Gehäusekörper, wobei der Gehäusekörper eine vordere Seitenwand (1a) und eine hintere Seitenwand (1b) aufweist, die einander gegenüber liegend angeordnet sind, ein Raum zwischen der vorderen Seitenwand (1a) und der hinteren Seitenwand (1b) ausgelegt ist, um zu einem Ende eines Handapparats (14) zu passen, der mit einer vorderen Kamera und einer hinteren Kamera ausgestattet ist, eine Schnappöffnung einer vorderen Zusatzlinse (2) in der vorderen Seitenwand (1a) bereitgestellt ist und der vorderen Kamera (8) des Handapparats (14) entspricht, und eine Schnappöffnung einer hinteren Zusatzlinse (9) in der hinteren Seitenwand (1b) bereitgestellt ist und der hinteren Kamera (8) des Handapparats (14) entspricht,
**dadurch gekennzeichnet, dass**
eine Schnappöffnung (2) der vorderen Zusatzlinse und eine Schnappöffnung (9) der hinteren Zusatzlinse beide zwei Abschnitte von vorstehenden ersten Rippen (13) aufweisen, die auf der Innenwand der Schnappöffnung gebildet und in der Umfangsrichtung voneinander beabstandet sind;
die vordere Zusatzlinse (12) und/oder die hintere Zusatzlinse (11) einen Pass-Kopf aufweist, die Außenwand des Pass-Kopfs mit zwei vorstehenden zweiten Rippen (16) gebildet ist, die in der Umfangsrichtung voneinander beabstandet sind, und ein vorstehenden Absatz gegenüber den zweiten Rippen (16) angeordnet ist, um einen Schnappschlitz zwischen den zweiten Rippen (16) und dem vorstehenden Absatz zu bilden, die erste Rippe (13) ausgelegt ist, um den Schnappschlitz mit der Drehung der Schnappöffnung einzugreifen, nachdem der Pass-Kopf in die Schnappöffnung eingeführt ist, und die erste Rippe (13), die zweite Rippe (16) und der vorstehende Absatz derart konstruiert sind, dass die Passung zwischen der ersten Rippe (13) und dem Schnappschlitz von einer Spielanpassung zu einer Pressanpassung im Prozess des Eintretens der ersten Rippe (13) in den Schnappschlitz geändert wird;
wobei eine Fläche der ersten Rippe (13), die der zweiten Rippe (16) gegenüber liegt oder dem vorspringenden Absatz gegenüber liegt, wie eine schraubenförmige Fläche gebildet ist; oder wobei eine Fläche der zweiten Rippe (16). die dem vorspringenden Absatz gegenüber liegt oder eine Fläche des vorspringenden Absatzes, die der zweiten Rippe (16) gegenüber liegt, wie eine schraubenförmige Fläche gebildet ist.

2. Verbindungsstruktur einer externen Linse nach Anspruch 1, **dadurch gekennzeichnet, dass** der Gehäusekörper auch eine untere Wand und einander gegenüber angebrachte linke und rechte Seitenwände umfasst; ein Einführungshohlraum, der für das Ende des Handapparats (14) ist, an dem die vordere und hintere Kamera angeordnet sind, um darin eingeführt zu werden, von der unteren Wand, der linken Seitenwand, der rechten Seitenwand, der vorderen Seitenwand (1a), und der hinteren Seitenwand (1b) gebildet ist; und der Einführungshohlraum eine Tiefe aufweist, die ausgelegt ist, damit das Ende des Handapparats darin eingeführt ist, ohne den Anzeigebildschirm des Handapparats zu behindern.

3. Verbindungsstruktur einer externen Linse nach Anspruch 1, **dadurch gekennzeichnet, dass** ein Hörerloch (4) auch in der vorderen Seitenwand (1a) an einer Position bereitgestellt ist, die einem Hörer (6) des Handapparats entspricht und mit dem Hörer (6) ausgefluchtet ist.

4. Verbindungsstruktur einer externen Linse nach Anspruch 1, **dadurch gekennzeichnet, dass** ein Distanzsensorloch (3) auch in der vorderen Seitenwand (1a) an einer Position bereitgestellt ist, die einem Distanzsensor (7) des Handapparats entspricht und mit dem Distanzsensor (7) ausgefluchtet ist.

5. Verbindungsstruktur einer externen Linse nach Anspruch 1, **dadurch gekennzeichnet, dass** ein Taschenlampenloch (10) auch in der hinteren Seitenwand (1b) an einer Position bereitgestellt ist, die einer Taschenlampe des Handapparats entspricht und mit der Taschenlampe ausgefluchtet ist.

6. Verbindungsstruktur einer externen Linse nach Anspruch 5, **dadurch gekennzeichnet, dass** das Taschenlampenloch (10) mit der Schnappöffnung der hinteren Zusatzlinse (9) in Kommunikation ist.

7. Verbindungsstruktur einer externen Linse, **dadurch gekennzeichnet, dass** der Gehäusekörper auch eine laterale Seitenwand (214) aufweist, die ausgelegt ist, um zu lateralen Seiten des Handapparats zu passen und die vordere Seitenwand (1a) mit der hinteren Seitenwand (1b) zu verbinden; der Gehäusekörper mit einer Verbindungsstruktur (211) ausgestattet ist, um mit externem Handapparat-Zubehör eine Verbindung aufzubauen, wobei die Verbindungsstruktur (211) eine erste Verbindungsstruktur (2111) auf der lateralen Seitenwand (214) umfasst, um fest mit einem Aufhelllicht verbunden zu sein.

8. Verbindungsstruktur einer externen Linse nach Anspruch 7, **dadurch gekennzeichnet, dass** die Verbindungsstruktur (211) eine gewindegeschnittene Verbindungsstruktur oder eine schnappbefestigte Verbindungsstruktur ist.

9. Verbindungsstruktur einer externen Linse nach Anspruch 7, **dadurch gekennzeichnet, dass** die Länge der vorderen Seitenwand (1a) entlang der Längsrichtung des Handapparats nicht länger als die Distanz von der Kante des Handapparats zum Anzeigebildschirm des Handapparats ist.

## Revendications

1. Structure de liaison d'objectif extérieur pour combiné, comprenant :
un objectif d'extension avant (12) et/ou un objectif d'extension arrière (11) ;
un corps de boîtier, le corps de boîtier a une paroi latérale avant (1a) et une paroi latérale arrière (1b) qui sont disposées de manière opposée, un espace entre la paroi latérale avant (1a) et la paroi latérale arrière (1b) est adaptée pour monter une extrémité d'un combiné (14) doté d'un appareil photo avant et d'un appareil photo arrière, une ouverture d'encliquetage d'objectif d'extension avant (2) est prévue dans la paroi latérale avant (1a) et correspond à l'appareil photo avant (8) du combiné (14) et une ouverture d'encliquetage d'objectif d'extension arrière (9) est prévue dans la paroi latérale arrière (1b) et correspond à l'appareil photo arrière du combiné (14),
**caractérisée en ce que** :
l'ouverture d'encliquetage d'objectif d'extension avant (2) et l'ouverture d'encliquetage d'objectif d'extension arrière (9) ont toutes deux, deux sections de premières nervures (13) en saillie formées sur la paroi interne de l'ouverture d'encliquetage et espacées dans la direction circonférentielle ;
l'objectif d'extension avant (12) et/ou l'objectif d'extension arrière (11) a une tête de montage, la paroi externe de la tête de montage est formée avec deux secondes nervures (16) en saillie espacées dans la direction circonférentielle et un épaulement en saillie disposé à l'opposé des secondes nervures (16) afin de former une fente d'encliquetage entre la seconde nervure (16) et l'épaulement en saillie, la première nervure (13) est adaptée pour entrer dans la fente d'encliquetage avec la rotation de l'ouverture d'encliquetage après que la tête de montage a été insérée dans l'ouverture d'encliquetage, et la première nervure (13), la seconde nervure (16) et l'épaulement en saillie sont construits de sorte que le montage entre la première nervure (13) et la fente d'encliquetage est modifié d'un montage avec jeu à un montage par interférence dans le processus de la première nervure (13) qui pénètre dans la fente d'encliquetage ;
dans laquelle une surface de la première nervure (13) faisant face à la seconde nervure (16) ou faisant face à l'épaulement en saillie, est formée comme une surface hélicoïdale ; ou dans laquelle une surface de la seconde nervure (16) faisant face à l'épaulement en saillie ou une surface de l'épaulement en saillie faisant face à la seconde nervure (16) est formée comme une surface hélicoïdale.

2. Structure de liaison d'objectif extérieur selon la revendication 1, **caractérisée en ce que** le corps de boîtier a également une paroi inférieure et des parois latérales gauche et droite disposées à l'opposé ; une cavité d'insertion qui est pour l'extrémité du combiné (14) où les appareils photo avant et arrière sont agencés pour y être insérés, est formée par la paroi inférieure, la paroi latérale gauche, la paroi latérale droite, la paroi latérale avant (1a) et la paroi latérale arrière (1b) ; et la cavité d'insertion a une profondeur qui est adaptée pour l'extrémité du combiné, étant insérée sans obstruer l'écran d'affichage du combiné.

3. Structure de liaison d'objectif extérieur selon la revendication 1, **caractérisée en ce qu'**un trou d'écouteur (4) est également prévu dans la paroi latérale avant (1a) à un emplacement correspondant à un écouteur (6) du combiné et est aligné avec l'écouteur (6).

4. Structure de liaison d'objectif extérieur selon la revendication 1, **caractérisée en ce qu'**un trou de capteur de distance (3) est également prévu dans la paroi latérale avant (1a) à l'emplacement correspondant à un capteur de distance (7) du combiné et est aligné avec le capteur de distance (7).

5. Structure de liaison d'objectif extérieur selon la revendication 1, **caractérisée en ce qu'**un trou de flash (10) est également prévu dans la paroi latérale arrière (1b) à un emplacement correspondant à un flash du combiné et est aligné avec le flash.

6. Structure de liaison d'objectif extérieur selon la revendication 5, **caractérisée en ce que** le trou de flash (10) communique avec l'ouverture d'encliquetage d'objectif d'extension arrière (9).

7. Structure de liaison d'objectif extérieur selon la revendication 1, **caractérisée en ce que** le corps de boîtier a également une paroi latérale (214) adaptée pour se monter sur les côtés latéraux du combiné et interconnectant la paroi latérale avant (1a) avec la paroi latérale arrière (1b) ; le corps de boîtier est prévu avec une structure de raccordement (211) pour se raccorder aux accessoires de combiné externes, la structure de raccordement (211) comprend une première structure de raccordement (2111) sur la paroi latérale (214) pour être raccordée de manière fixe à une lumière d'appoint.

8. Structure de liaison d'objectif extérieur selon la revendication 7, **caractérisée en ce que** la structure de raccordement (211) est une structure de raccordement filetée ou une structure de raccordement montée par encliquetage.

9. Structure de liaison d'objectif extérieur selon la revendication 7, **caractérisée en ce que** la longueur de la paroi latérale avant (1a) le long de la direction longitudinale du combiné n'est pas plus longue de la distance allant du bord du combiné à l'écran d'affichage du combiné.
